# EUROPEAN PATENT SPECIFICATION

(11) **EP 1 714 802 B1**
(45) Date of publication and mention of the grant of the patent: **05.11.2008**
(21) Application number: 06016960.4
(22) Date of filing: 17.09.2002
(51) Int. Cl.: B60C 19/12, B60C 5/14, B29C 73/22, C09K 3/10

(54) **Pneumatic tire having an adhesive sealant layer**
Reifen mit klebriger Versiegelungsschicht
Pneumatique contenant une couche étanche

(30) Priority: 14.09.2001 JP 2001280208; 14.09.2001 JP 2001280212; 28.09.2001 JP 2001302757; 10.10.2001 JP 2001312867; 11.10.2001 JP 2001313438; 22.08.2002 JP 2002242363; 22.08.2002 JP 2002242372
(43) Date of publication of application: 25.10.2006
(62) Divisional of application: 02765572.9
(73) Proprietor: THE YOKOHAMA RUBBER CO., LTD., Tokyo 105-8685 (JP); HONDA GIKEN KOGYO KABUSHIKI KAISHA, Minato-ku, Tokyo 107-8556 (JP)
(72) Inventor: Fukutomi, Takashi, Kanagawa-ken 254-8601 (JP); Sekiguchi, Takumi, Kanagawa-ken 254-8601 (JP); Nakakita, Issei, Kobe-shi 651-2275 (JP); Naito, Mitsuru, Kanagawa-ken 254-8601 (JP); Kobayashi, Yuichi, Kanagawa-ken 254-8601 (JP); Watanabe, Koji, Kanagawa-ken 254-8601 (JP); Ikegami, Tetsuo, Shinshiro-shi Aichi-ken 441-1343 (JP); Makino, Satoshi, Wako-shi Saitama-ken 351-0193 (JP); Miyawaki, Naoya, Wako-shi Saitama-ken 351-0193 (JP); Mizone, Tetsuya, Wako-shi Saitama-ken 351-0193 (JP)
(74) Representative: HOFFMANN EITLE

(56) References cited:
- EP-A- 0 302 400
- US-A- 3 910 334
- US-A- 3 981 342
- US-A- 4 037 636

## Description

### TECHNICAL FIELD

The present invention relates to a pneumatic tire having a self-sealing function. More specifically, the present invention relates to a pneumatic tire having an adhesive sealant on the inner surface of the tire, and a process for producing the same.

### BACKGROUND ART

Conventionally proposed as measures for a puncture of a tire when the tire steps on a nail or the like during driving are: (1) a run-flat tire in which a rigid portion is inserted into the tire; (2) a process for sealing a puncture by injecting a liquid-like mending agent into a tire from an air valve upon puncture; (3) a process for superposing an adhesive sealant on the inner surface of a tire in advance upon tire production; and the like.

However, the run-flat tire of (1) has problems that the weight thereof is increased by a rigid material and this causes aggravation of riding comfort. A problem in the process for injecting a mending liquid of (2) is not as serious as the run-flat tire of (1), in terms of weight increase. However, there is a problem that a driver must go outside the car to inject the liquid upon puncture.

The process of (3) has advantages over the run-flat tire of (1) and the process of (2), in which the problem of weight increase as in the run-flat tire of (1) is settled, and the process of (3) is capable of self-sealing without having a person inject the liquid upon puncture as in the process of (2).

An example of the process of (3) is proposed in Japanese Patent Laid-Open Publication No. 53-55802, in which a rubber composition having peroxide added to polyisobutylene is disposed on the inner surface of the tire and heated to be decomposed upon tire vulcanization to obtain an adhesive sealant.

Nevertheless, when the foregoing sealant rubber composition is decomposed, polyisobutylene is decomposed further, and liquid polybutene compounded as an adhesive is decomposed by peroxide. Accordingly, a large quantity of butane gas is generated. As a result, numerous voids are generated inside the sealant layer by the gas, thereby aggravating the uniformity of the amount and the thickness of the sealant layer. Thus, when a nail or the like pierces a tread, the sealant does not stick to the nail or the like uniformly. Consequently, the self-sealing function is reduced. Moreover, when the cover rubber layer is disposed on the inner side of the sealant layer to prevent the stickiness, a large quantity of gas is accumulated between the sealant layer and the cover rubber layer. In this case, the cover rubber layer may come off.

In addition, the adhesive sealant obtained by heating and decomposing polyisobutylene by peroxide has large fluidity. Hence, when the sealant is disposed on the inner surface of the tire, the thickness changes and becomes uneven. Therefore, there has been a problem that the sealing performance is aggravated in a thin portion.

Moreover, when the adhesive sealant is created, the peroxide moves to the carcass layer or the like. Accordingly, the carcass rubber is cured, and the inner liner rubber is softened. Thus, there has been a problem that material properties are aggravated.

Furthermore, the foregoing adhesive sealant needs to be disposed with a certain thickness in order to exhibit high sealing performance. The weight increase cannot be avoided compared with a normal tire. Thus, there has been a problem that the fuel consumption of an automobile is increased.

US A 4,037,636 discloses a pneumatic tire in which a sealant layer is disposed in a region of an inner surface tire which corresponds to at least the tread and wherein the sealant layer comprises freely movable suspended hollow spheres.

Further, from US A 3,910,334 a tire-rim construction is known wherein the tire-rim combination is provided with thin-walled capsules containing a lubricant-sealant material in the tire's inflation chamber.

US A 3,981,342 describes a pneumatic tire in which an adhesive sealant layer is disposed in a region of an inner surface of the tire which corresponds at least to a tread and wherein the sealant layer is made of an adhesive sealant. This tire does not comprise powder balloons distributed in an adhesive sealant.

From EP A1 0 302 400, a pneumatic tire is known which does not comprise the features of the present application.

Because of the foregoing disadvantages, a pneumatic tire with the sealant layer obtained from the rubber composition, in which peroxide is added to polyisobutylene, is hardly used in practice. The pneumatic tire is not effectively utilized as a punctureless tire in the reality.

### DISCLOSURE OF THE INVENTION

An object of the present invention is to provide a pneumatic tire, in which suppression of the weight increase due to the sealant layer is enabled when a sealant layer is formed, and thereby the utility is enhanced as a punctureless tire.

A first reference- pneumatic tire is as follows: a pneumatic tire, in which a adhesive sealant layer is disposed in a region of the inner surface of the tire which corresponds at least to a tread, is characterized in that the sealant layer is made of an adhesive sealant obtained by heating a rubber composition containing 0.2 to 20 parts by weight of peroxide and 5 to 50 parts by weight of at least one selected from the group consisting of a liquid ethylene/α-olefin copolymer, liquid polybutadiene and liquid polyisoprene per 100 parts by weight of a rubber ingredient containing not less than 50 wt. % of polyisobutylene.

The process for producing said first pneumatic tire is characterized by disposing a sealant rubber composition sheet, which contains 0.2 to 20 parts by weight of peroxide and 5 to 50 parts by weight of at least one selected from the group consisting of a liquid ethylene/α-olefin copolymer, liquid polybutadiene and liquid polyisoprene per 100 parts by weight of a rubber ingredient containing not less than 50 wt. % of polyisobutylene, in a region of the inner surface of an unvulcanized tire which corresponds at least to a tread, and forming an adhesive sealant layer by heating the sealant rubber composition at the same time as vulcanization of the unvulcanized tire.

As described above, when the sealant layer is formed based on decomposition reaction of polyisobutylene, at least one selected from the group consisting of a liquid ethylene/α-olefin copolymer, liquid polybutadiene, and liquid polyisoprene is used as an adhesive with a small amount of gas generation caused by reaction with peroxide. Accordingly, it is possible to suppress the gas generation in the sealant layer to make the thickness of the sealant layer uniform. Thus, a puncture-preventing performance against a nail or the like piercing the tread can be improved.

A second reference pneumatic tire is as follows: a pneumatic tire, in which an adhesive sealant layer is disposed in a region of the inner surface of the tire which corresponds at least to a tread, is characterized in that the sealant layer is made of an adhesive sealant obtained by heating a rubber composition containing 0.2 to 20 parts by weight of peroxide per 100 parts by weight of a rubber ingredient containing not less than 50 wt. % of polyisobutylene, and that a cover rubber layer, which is made of a rubber composition containing butadiene rubber, is disposed on the inner side of the sealant layer.

Moreover, the process for producing said second pneumatic tire is characterized by disposing a sealant rubber composition sheet, which contains 0.2 to 20 parts by weight of peroxide per 100 parts by weight of a rubber ingredient containing not less than 50 wt. % of polyisobutylene, in a region of the inner surface of an unvulcanized tire which corresponds at least to a tread, disposing a cover rubber layer, which is made of a rubber composition, a main ingredient of which is butadiene rubber, in the inner side of the sheet, and forming an adhesive sealant layer by heating the sealant rubber composition at the same time as vulcanization of the unvulcanized tire.

As described above, when the sealant layer is formed based on decomposition reaction of polyisobutylene, a cover rubber layer, which is made of the rubber composition containing butadiene rubber excellent in gas permeability, is disposed on the inner side of the sealant layer. Accordingly, the gas generated when polyisobutylene is decomposed permeates the cover rubber layer and will not stay between the sealant layer and the cover rubber layer, thereby preventing separation of the cover rubber layer. Thus, a puncture-preventing performance against a nail or the like piercing the tread can be improved.

A third reference pneumatic tire is as follows: a pneumatic tire, in which an adhesive sealant layer is disposed in a region of the inner surface of the tire which corresponds at least to a tread, is characterized in that the sealant layer is made of an adhesive sealant obtained by heating a rubber composition containing 0.2 to 20 parts by weight of peroxide per 100 parts by weight of a rubber ingredient containing not less than 50 wt. % of polyisobutylene, and that a thermoplastic resin film is disposed on at least one side of the sealant layer.

Moreover, the process for producing said third pneumatic tire is characterized by disposing a sealant rubber composition sheet, which contains 0.2 to 20 parts by weight of peroxide per 100 parts by weight of a rubber ingredient containing not less than 50 wt. % of polyisobutylene, and a thermoplastic resin film in a region of the inner surface of an unvulcanized tire which corresponds at least to a tread, and forming an adhesive sealant layer by heating the sealant rubber composition at the same time as vulcanization of the unvulcanized tire.

As described above, when the sealant layer is formed based on decomposition reaction of polyisobutylene, the thermoplastic resin film is disposed on at least one side of the sealant layer. Accordingly, some of degradable polymers of polyisobutylene are bonded with the surface of the thermoplastic resin film and distributed uniformly over the entire surface. Consequently, a flow of the adhesive sealant is suppressed, and the sealant is maintained uniformly on the inner surface of the tire. Thus, a puncture-preventing performance against a nail or the like piercing the tread can be improved.

A fourth reference pneumatic tire is as follows: a pneumatic tire, in which an adhesive sealant layer is disposed in a region of the inner surface of the tire which corresponds at least to a tread, is characterized in that the sealant layer is made of an adhesive sealant obtained by heating a rubber composition containing 0.2 to 20 parts by weight of peroxide per 100 parts by weight of a rubber ingredient containing not less than 50 wt. % of polyisobutylene, and that a barrier layer is interposed between the sealant layer and an inner liner.

As described above, when the sealant layer is formed based on decomposition reaction of polyisobutylene, the barrier layer is interposed between the sealant layer and the inner liner. Accordingly, it is possible to prevent aggravation of material property due to the movement of the peroxide in the sealant rubber composition to a carcass layer or the like. Herein, the barrier layer satisfies one of the conditions (a), (b) and (c) below:
(a) The barrier layer is made of halogenated butyl rubber or cloth impregnated with halogenated butyl rubber.
(b) The barrier layer contains 20 to 100 parts by weight of clay, a main ingredient of which is calcium silicate hydrate, per 100 parts by weight of polymer.
(c) The barrier layer contains 0.5 to 5 parts by weight of a radical sealing agent of peroxide per 100 parts by weight of polymer.

Moreover, the inner liner can be also used as the barrier layer. In this case, the sealant layer is disposed on the inner side of the inner liner, and the inner liner satisfies one of the conditions (a), (b) and (c) below.
(a) The inner liner is made of halogenated butyl rubber or cloth impregnated with halogenated butyl rubber.
(b) The inner liner contains 20 to 100 parts by weight of clay, a main ingredient of which is calcium silicate hydrate, per 100 parts by weight of polymer.
(c) The inner liner contains 0.5 to 5 parts by weight of a radical sealing agent of peroxide per 100 parts by weight of polymer.

The pneumatic tire of the present invention achieving the above object is as follows: a pneumatic tire, in which an adhesive sealant layer is disposed in a region of the inner surface of the tire which corresponds at least to a tread, is characterized in that the sealant layer is made of an adhesive sealant and powder balloons distributed in the adhesive sealant.

The adhesive sealant is obtained by heating a rubber composition containing 0.2 to 20 parts by weight of peroxide per 100 parts by weight of a rubber ingredient containing not less than 50 wt. % of polyisobutylene.

As described above, the powder balloons are distributed in the adhesive sealant of the sealant layer disposed on the inner surface of the tire. Accordingly, it is possible to have the thickness required to exhibit the self-sealing function even with a smaller amount of the adhesive sealant. Thus, the weight increase due to the sealant layer can be suppressed to a minimum. Particularly, when the sealant layer is formed based on decomposition reaction of polyisobutylene, it is possible to exhibit excellent puncture-preventing performance while the weight increase is suppressed to a minimum.

### BRIEF DESCRIPTION OF THE DRAWINGS

Fig. 1 is a meridian half sectional view showing a first reference pneumatic tire.
Fig. 2 is an explanatory view showing a state where a nail is piercing the pneumatic tire in Fig. 1.
Fig. 3 is a meridian half sectional view showing a second reference pneumatic tire.
Fig. 4 is an explanatory view showing a state where a nail piercing the pneumatic tire in Fig. 3 is being removed.
Fig. 5 is a meridian half sectional view showing a third reference pneumatic tire
Fig. 6 is an explanatory view showing a state where a nail is piercing the pneumatic tire in Fig. 5.
Fig. 7 is a meridian half sectional view showing a fourth reference pneumatic tire.
Fig. 8 is a structural view showing a model for evaluating an experiment on the fourth embodiment of the present invention.
Fig. 9 is a meridian half sectional view showing a pneumatic tire formed in the embodiment of the present invention.
Fig. 10 is an explanatory view showing a state where a nail is piercing the pneumatic tire in Fig. 9.

### BEST MODES FOR CARRYING OUT THE INVENTION

In the present invention, a main rubber ingredient of a sealant rubber composition is polyisobutylene. Herein, polyisobutylene includes ones copolymerized with a small amount of isoprene or the like. In the case of copolymerization, polyisobutylene with not more than the unsaturation degree of 2.2 mol. % is normally used.

The sealant rubber composition is required to include not less than 50 wt. % of polyisobutylene as a rubber ingredient of the sealant rubber composition. If less than 50 wt. % of polyisobutylene is contained as the rubber ingredient, the generation amount of degradable polymers with high viscosity is extremely small. Thus, it is impossible to exhibit the puncture-preventing effects sufficiently.

Other rubber ingredients that can be compounded in the sealant rubber composition are not particularly limited as long as the ingredients can be used for the tire. Examples of the rubber ingredients are natural rubber, isoprene rubber, styrene-butadiene rubber (SBR) and butadiene rubber (BR).

The sealant rubber composition needs to contain 0.2 to 20 parts by weight of peroxide per 100 parts by weight of the foregoing rubber ingredient. If the compounding amount of the peroxide is less than 0.2 parts by weight per 100 parts by weight of the rubber ingredient, polymers decomposable with peroxide, such as polyisobutylene, are not sufficiently decomposed. Accordingly, it is impossible to exhibit the puncture-preventing effects sufficiently. On the other hand, if the compounding amount exceeds 20 parts by weight, the addition amount is extremely large. Thus, the decomposition develops excessively, and the viscosity of the adhesive composition becomes extremely low. Hence, the puncture-preventing effects cannot be sufficiently obtained. When the entire rubber ingredient is polyisobutylene, it is preferable to compound 0.2 to 20 parts by weight of peroxide per 100 parts by weight of polyisobutylene.

Examples of the peroxide include acyl peroxides such as benzoyl peroxide and P-chlorobenzoyl peroxide, ketone peroxides such as methylethylketone peroxide, peroxyesters such as t-butylperoxyacetate, t-butylperoxybenzoate and t-butylperoxyphthalate, alkyl peroxides such as dicumyl peroxide, di-t-butylperoxybenzoate, and 1,3-bis (t-butylperoxy isopropyl) benzene, and hydroperoxides such as t-butylhydroperoxide. Especially, dicumyl peroxide is preferred.

To the sealant rubber composition, a catalyst such as cobalt naphthenate which accelerates the decomposition of polymers by peroxide, an inorganic filler such as carbon black and silica, an adhesive, or a plasticizer such as aromatic series process oil, naphthene series process oil and paraffin series process oil may be added as necessary. However, clay is not preferred because the clay hinders the decomposition of the peroxide.

Next, various embodiments of the present invention are detailed with reference to the drawings.

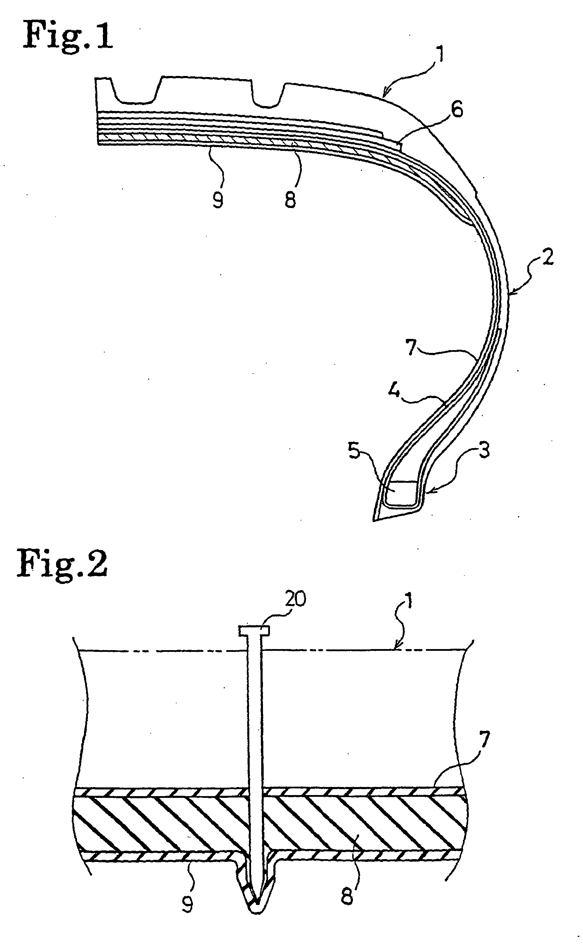

Fig. 1 shows a first reference pneumatic tire. In Fig. 1, reference numerals 1, 2 and 3 denote a tread, a sidewall and a bead, respectively. A carcass layer 4 is laid between a bilateral pair of beads 3 and 3, and both ends of the carcass layer 4 in a tire width direction thereof are turned up around the bead cores 5 from the inner to outer side of the tire. Belt layers 6 are provided on the periphery of the carcass layer 4 in the tread 1. An inner liner 7 is disposed on the inner side of the carcass layer 4. A sealant layer 8 is disposed on the inner side of the inner liner 7 at a position corresponding to the tread 1. A cover rubber layer 9 is disposed on the inner side of the sealant layer 8.

Butyl rubber, which is excellent in impermeability, is generally used in the inner liner 7. However, a thermoplastic resin film may be used.

The sealant layer 8 is made of an adhesive sealant obtained by heating a sealant rubber composition containing 0.2 to 20 parts by weight of peroxide and 5 to 50 parts by weight of at least one selected from the group consisting of a liquid ethylene/α-olefin copolymer, liquid polybutadiene and liquid polyisoprene per 100 parts by weight of a rubber ingredient containing not less than 50 wt. % of polyisobutylene.

The cover rubber layer 9 is effective for uniformly maintaining the sealant layer 8 over the entire inner surface of the tire and preventing the stickiness. This cover rubber layer 9 is formed of natural rubber, SBR, BR or the like.

To produce the pneumatic tire with this structure, a sealant rubber composition sheet is disposed on the inner surface of an unvulcanized tire, and the adhesive sealant layer 8 is formed by heating the sealant rubber composition at the same time as vulcanization of the unvulcanized tire in a normal process for producing a pneumatic tire.

When the sealant layer 8 is formed based on decomposition reaction of polyisobutylene as described above, at least one selected from the group consisting of a liquid ethylene/α-olefin copolymer, liquid polybutadiene and liquid polyisoprene is used as an adhesive having a small amount of gas generation caused by the reaction with peroxide. This suppresses gas generation in the sealant layer 8, and the thickness of the sealant layer 8 can be uniform. Thus, it is possible to improve the puncture-preventing performance against a nail or the like piercing the tread.

Punctureless effects by the pneumatic tire can be obtained as follows: as shown in Fig. 2, when a nail 20 pierces from the tread 1 to the sealant layer 8 on the inner side of the tire through the inner liner 7, the cover rubber layer 9 forms a triangular shape. At the same time, the sealant of the sealant layer 8 sticks to the nail 20 so as to adhere to the nail 20 to seal the tire. Thus, air will not leak. By contrast, when the nail 20 is removed by centrifugal force upon high-speed driving, the sealant stuck to the periphery of the nail 20 is drawn to a through-hole of the tread 1 to seal the tire. Thus, air will not leak.

Examples of the liquid ethylene/α-olefin copolymer are an ethylene-propylene copolymer and an ethylene-butylene copolymer. Liquid polybutadiene preferably has a molecular weight of 1000 to 4000. Liquid polyisoprene preferably has a molecular weight of 10000 to 50000.

The compounding amount of the liquid ethylene/α-olefin copolymer, liquid polybutadiene and liquid polyisoprene is 5 to 50 parts by weight per 100 parts by weight of polyisobutylene. The liquid ethylene/α-olefin copolymer, liquid polybutadiene and liquid polyisoprene may be compounded individually or as a mixture. If the compounding amount is less than 5 parts by weight, the viscosity is degraded. If the compounding amount exceeds 50 parts by weight, the fluidity during driving becomes large, and the sealant is concentrated in the center of the tire.

The thickness of the sealant layer 8 preferably ranges from 1 to 4 mm. If the sealant layer 8 is thinner than 1 mm, the puncture-preventing effects are reduced. If the sealant layer 8 is thicker than 4 mm, the tire weight increases. Thus, these are not preferable.

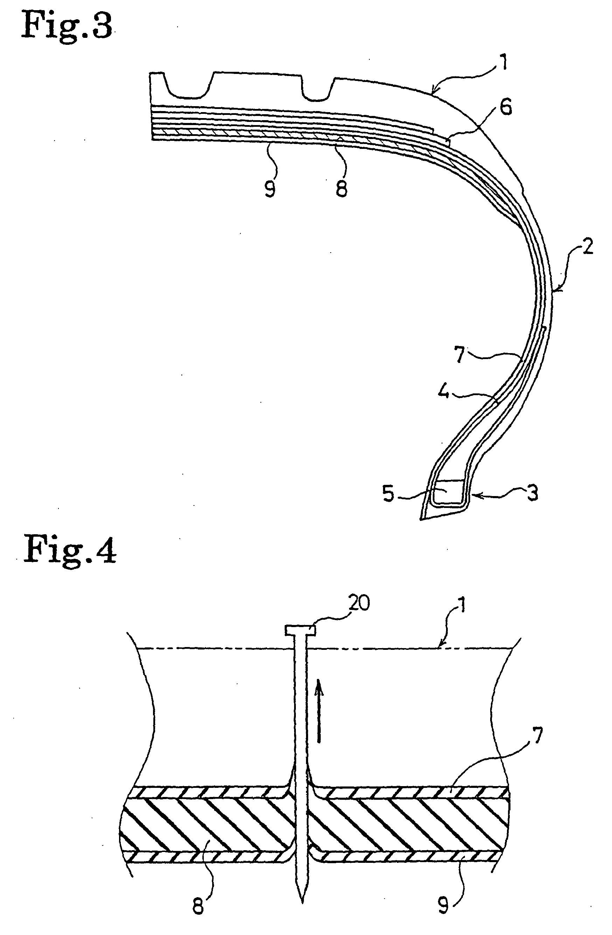

Fig. 3 shows a second reference pneumatic tire. In Fig. 3, reference numerals 1, 2 and 3 denote a tread, a sidewall and a bead, respectively. A carcass layer 4 is laid between a bilateral pair of beads 3 and 3, and both ends of the carcass layer 4 in a tire width direction thereof are turned up around the bead cores 5 from the inner to outer side of the tire. Belt layers 6 are provided on the periphery of the carcass layer 4 in the tread 1. An inner liner 7 is disposed on the inner side of the carcass layer 4. A sealant layer 8 is disposed on the inner side of the inner liner 7 at a position corresponding to the tread 1. A cover rubber layer 9 is disposed on the inner side of the sealant layer 8.

Butyl rubber, which is excellent in impermeability, is generally used in the inner liner 7: However, a thermoplastic resin film may be used.

The sealant layer 8 is made of an adhesive sealant obtained by heating a sealant rubber composition containing 0.2 to 20 parts by weight of peroxide per 100 parts by weight of a rubber ingredient containing not less than 50 wt. % of polyisobutylene.

The cover rubber layer 9 is effective for uniformly maintaining the sealant layer 8 over the entire inner surface of the tire and preventing the stickiness. This cover rubber layer 9 is formed of a rubber composition, a main ingredient of which is butadiene rubber.

To produce the pneumatic tire with this structure, a sealant rubber composition sheet is disposed on the inner surface of an unvulcanized tire in a normal process for producing a pneumatic tire. Moreover, the cover rubber layer 9 made of a rubber composition, a main ingredient of which is butadiene rubber, is disposed on the inner side of the sheet. The sealant rubber composition is heated at the same time as vulcanization of the unvulcanized tire to form the adhesive sealant layer 8.

When the sealant layer 8 is formed based on decomposition reaction of polyisobutylene as described above, the cover rubber layer 9, which is made of a rubber composition containing butadiene rubber excellent in gas permeability, is disposed on the inner side of the sealant layer 8. Accordingly, the gas generated when polyisobutylene is decomposed permeates the cover rubber layer 9. Thus, the generated gas will not stay between the sealant layer 8 and the cover rubber layer 9, and it is possible to prevent the separation of the cover rubber layer 9. Therefore, the puncture-preventing performance against a nail or the like piercing the tread can be improved.

The punctureless effects by the pneumatic tire can be obtained as follows: as shown in Fig. 4, when a nail 20 pierces from the tread 1 to the sealant layer 8 and the cover rubber layer 9 on the inner side of the tire through the inner liner 7, the sealant of the sealant layer 8 sticks to the nail 10 so as to adhere to the nail 10 to seal the tire. Thus, air will not leak. By contrast, when the nail 20 is removed by centrifugal force upon high-speed driving, the sealant stuck to the periphery of the nail 20 is drawn to a through-hole of the tread 1 to seal the tire. Thus, air will not leak.

The thickness of the sealant layer 8 preferably ranges from 1 to 4 mm. If the sealant layer 8 is thinner than 1 mm, the amount of the adhesive sealant is reduced, and thus the puncture-preventing effects are reduced. If the sealant layer 8 is thicker than 4 mm, the tire weight increases.

The cover rubber layer 9 is made of a rubber composition, a main ingredient of which is butadiene rubber. Butadiene rubber is excellent in gas permeability compared with other rubber ingredients, and the butadiene rubber content is preferably at least 30 wt. % of the rubber ingredient of the rubber composition. If the content is less than 30 wt. %, the gas permeability is aggravated, and gas generated by the decomposition of polyisobutylene has difficulty permeating the rubber composition. Other than butadiene rubber, rubber ingredients such as butyl rubber, isoprene rubber and styrene-butadiene rubber, which are normally used in tires, are compounded. The whole rubber ingredient may be butadiene rubber. Moreover, other than the rubber ingredient, an inorganic filler, an organic filler, a plasticizer, a vulcanizer, a vulcanization accelerator, an antioxidant and the like can be compounded as ingredients.

The thickness of the cover rubber layer 9 preferably ranges from 0.5 mm to 2.0 mm. If the cover rubber layer 9 is thinner than 0.5 mm, the strength is reduced, and the tire becomes prone to break. If the cover rubber layer 9 is thicker than 2.0 mm, the tire weight increases.

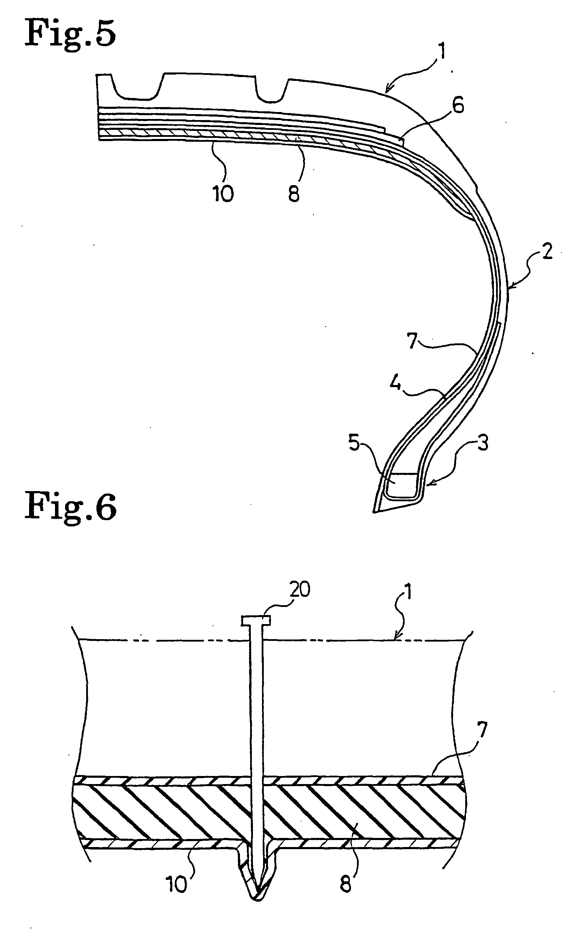

Fig. 5 shows a third reference pneumatic tire. In Fig. 5, reference numerals 1, 2 and 3 denote a tread, a sidewall and a bead, respectively. A carcass layer 4 is laid between a bilateral pair of beads 3 and 3, and both ends of the carcass layer 4 in a tire width direction thereof are turned up around the bead cores 5 from the inner to outer side of the tire. Belt layers 6 are provided on the periphery of the carcass layer 4 in the tread 1. An inner liner 7 is disposed on the inner side of the carcass layer 4. A sealant layer 8 is disposed on the inner side of the inner liner 7 at a position corresponding to the tread 1. A thermoplastic resin film 10 is disposed on the inner side of the sealant layer 8.

Butyl rubber, which is excellent in impermeability, is generally used in the inner liner 7. However, a thermoplastic resin film may be used. Especially, it is preferable to use a film made of a mixture composition of thermoplastic resin and elastomer.

The sealant layer 8 is made of an adhesive sealant obtained by heating a sealant rubber composition containing 0.2 to 20 parts by weight of peroxide per 100 parts by weight of a rubber ingredient containing not less than 50 wt. % of polyisobutylene.

To produce the pneumatic tire with this structure, a sealant rubber composition sheet and the thermoplastic resin film 10 are disposed on the inner surface of an unvulcanized tire, and the adhesive sealant layer 8 is formed by heating the sealant rubber composition at the same time as vulcanization of the unvulcanized tire in a normal process for producing a pneumatic tire.

The sealant layer 8 is formed based on decomposition reaction of polyisobutylene as described above. In the case where the thermoplastic resin film 10 is disposed at least on one side of the sealant layer 8, the peroxide is decomposed by the heat generated upon the vulcanization, thereby generating radicals. The radicals decompose polyisobutylene. Among the degradable polymers generated by the decomposition (adhesive sealant), ones that are in contact with the surface of the thermoplastic resin film 10 are bonded with the thermoplastic resin film 10 and distributed evenly on the surface. Thus, the flow of the adhesive sealant is constrained. The adhesive sealant, the flow of which is constrained, suppresses the fluidity of the adhesive sealant which is not bonded with the thermoplastic resin film 10. Accordingly, the adhesive sealant is maintained uniformly over the entire inner surface of the tire. By thus forming the sealant layer 8 with uniform thickness, sealing defects due to the deficiency of the thickness will not occur. Therefore, it is possible to improve the puncture-preventing performance against a nail or the like piercing the tread.

Punctureless effects by the pneumatic tire can be obtained as follows: as shown in Fig. 6, when a nail 20 pierces from the tread 1 to the sealant layer 8 on the inner side of the tire through the inner liner 7, the thermoplastic resin film 10 forms a triangular shape. At the same time, the sealant layer 8 sticks to the nail 20 so as to adhere to the nail 20 to seal the tire. Thus, air will not leak. By contrast, when the nail 20 is removed by centrifugal force upon high-speed driving, the sealant stuck to the periphery of the nail 20 is drawn to a through-hole of the tread 1 to seal the tire. Thus, air will not leak.

The thickness of the sealant layer 8 preferably ranges from 1 to 4 mm. If the sealant layer 8 is thinner than 1 mm, the puncture-preventing effects are reduced. If the sealant layer 8 is thicker than 4 mm, the tire weight increases.

The thermoplastic resin film 10 may be disposed on either the inner side or the outer side of the sealant layer 8 in a tire radial direction. Alternatively, the thermoplastic resin film 10 may be provided on both sides. However, more preferably, the thermoplastic resin film 10 is disposed on the inner side of the sealant layer 8 in the tire radial direction. When the thermoplastic resin film 10 is not disposed on the inner side, the sealant 8 is exposed to the inner surface of the tire. Hence, a person may touch the sealant layer 8 directly when the tire is fit to or removed from a vehicle. Accordingly, there is a possibility that the workability thereof may be reduced.

Moreover, when the thermoplastic resin films 10 are disposed on both sides of the sealant layer 8, it is possible to constrain the sealant layer 8 from both sides, and the uniformity of the thickness may be further improved. Furthermore, it is more effective to provide asperities on the surface of the thermoplastic resin film 10 to increase the contact area with the adhesive sealant.

This thermoplastic resin film may be also used as the inner liner by creating the inner liner with thermoplastic resin. When the inner liner is made of the thermoplastic resin film, the tire can be lightened compared with a conventional inner liner, a main ingredient of which is butyl rubber.

Single resin may constitute the thermoplastic resin film 10. Alternatively, resin composition in which elastomer is compounded to be a discontinuous phase may constitute the thermoplastic resin film. Examples of the resin are polyester series resin (e.g., polybutylene terephthalate (PBT), polyethylene terephthalate (PET), polyethylene isophthalate (PEI), a polybutylene terephthalate/tetramethylene glycol copolymer, a PET/PEI copolymer, polyarylate and polybutylene naphthalate), nylon series resin (e.g., nylon 6, nylon 66, nylon 46, nylon 11, nylon 12, nylon 610, nylon 612, a nylon 6/66 copolymer, a nylon 6/66/610 copolymer, nylon MXD 6, nylon 6T, a nylon 6/6T copolymer, a nylon 66/PP copolymer and a nylon 66/PPS copolymer) and polyolefin series resin (e.g., polyethylene, polypropylene and polybutylene). These may be used individually, or a plurality of resin may be selected to be mixed.

Examples of the elastomer distributed in a matrix of the thermoplastic resin are diene series rubber and a hydrogen addition compound thereof (e.g., NR, IR, epoxidized natural rubber, SBR, BR (high-cis BR and low-cis BR), NBR, hydrogenated NBR and hydrogenated SBR), olefin series rubber (e.g., ethylene propylene rubber, maleic acid-modified ethylene propylene rubber, butyl rubber, and copolymer with isobutylene and aromatic vinyl or a diene series monomer), acrylic rubber, ionomer, halogen-containing rubber (e.g., Br-butyl rubber, Cl-butyl rubber, a brominated compound of an isobutylene/paramethylstyrene copolymer, chloroprene rubber, hydrin rubber, chlorosulfonated polyethylene, chlorinated polyethylene and maleic acid-modified chlorinated polyethylene), silicone rubber (e.g., methyl vinyl silicone rubber, dimethyl silicone rubber and methyl phenyl vinyl silicone rubber), sulfur-containing rubber (e.g., polysulfide rubber), fluorine rubber (e.g., vinylidene fluoride series rubber, fluorine-containing vinyl ether series rubber, tetrafluoroethylene-propylene series rubber, fluorine-containing silicone series rubber and fluorine-containing phosphazene series rubber) and thermoplastic elastomer (e.g., styrene series elastomer, olefin series elastomer, polyester series elastomer, urethane series elastomer and polyamid series elastomer).

The thickness of the thermoplastic resin film 10 preferably ranges from 0.05 to 0.3 mm. If the film 10 is thinner than 0.05 mm, the strength of the film is reduced, and the film is prone to break. Thus, it is not preferable. When the film 10 is thicker than 0.3 mm, the film weight becomes excessively heavy, and the tire weight increases. Thus, it is not preferable. When asperities are provided on the surface of the film, the difference in asperities preferably ranges from 0 to 0.25 mm. In the case where the asperities are provided, there is a possibility that the film breaks in the tire upon driving when the thinnest portion of the film is thinner than 0. 05 mm.

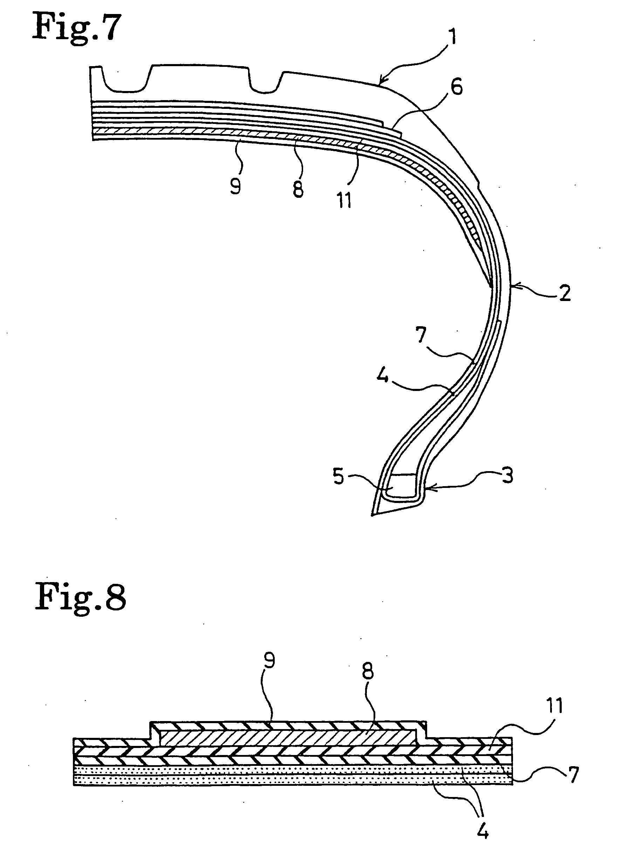

Fig. 7 shows a fourth reference pneumatic tire. In Fig. 7, reference numerals 1, 2 and 3 denote a tread, a sidewall and a bead, respectively. A carcass layer 4 is laid between a bilateral pair of beads 3 and 3, and both ends of the carcass layer 4 in a tire width direction thereof are turned up around the bead cores 5 from the inner to outer side of the tire. Belt layers 6 are provided on the periphery of the carcass layer 4 in the tread 1. An inner liner 7 is disposed on the inner side of the carcass layer 4. A barrier layer 11 is disposed on the inner side of the inner liner 7 at a position corresponding to the tread 1. A sealant layer 8 is disposed on the inner side of the barrier layer 11. A cover rubber layer 9 is disposed on the inner side of the sealant layer 8.

The sealant layer 8 is made of an adhesive sealant obtained by heating a sealant rubber composition containing 0.2 to 20 parts by weight of peroxide per 100 parts by weight of a rubber ingredient containing not less than 50 wt. % of polyisobutylene.

As described above, when the sealant layer 8 is formed based on decomposition reaction of polyisobutylene, the barrier layer 11 is interposed between the sealant layer 8 and the inner liner 7. Accordingly, it is possible to prevent aggravation of material property due to the movement of the peroxide in the sealant rubber composition to the carcass layer 4 or the like.

The barrier layer 11 can be made of halogenated butyl rubber or cloth impregnated with halogenated butyl rubber. Chlorinated butyl rubber and brominated butyl rubber are preferably used as halogenated butyl rubber.

The barrier layer 11 can be made of a polymer composition containing 20 to 100, preferably 20 to 50 parts by weight of clay, a main ingredient of which is calcium silicate hydrate, per 100 parts by weight of polymer.

Furthermore, the barrier layer 11 can be made of a polymer composition containing 0.5 to 5, preferably 1 to 2 parts by weight of a radical sealing agent of peroxide per 100 parts by weight of polymer.

Examples of the radical sealing agent of the peroxide are 2,2'-methylene-(4-methyl-6-butylphenol), 2,6-di-t-butyl-4-methylphenol, 2, 5-di-t-butyl-hydroquinone, 2,2'-methylene-bis (4-ethyl-6-t-butylphenol), phenyl-1-naphthylamine, octylated diphenylamine, phenothiazine, and p-(p-toluenesulfonyl amid)diphenylamine.

Moreover, the inner liner 7 may have the same function as the aforementioned barrier layer 11. Specifically, the inner liner 7 satisfies one of the conditions below.
(a) The inner liner is made of halogenated butyl rubber or cloth impregnated with halogenated butyl rubber.
(b) The inner liner contains 20 to 100 parts by weight of clay, a main ingredient of which is calcium silicate hydrate, per 100 parts by weight of polymer.
(c) The inner liner contains 0.5 to 5 parts by weight of a radical sealing agent of peroxide per 100 parts by weight of polymer.

In this case, the embodiments (a), (b) and (c) can be arbitrarily combined. For example, halogenated butyl rubber can be compounded with clay or the radical sealing agent. Butyl rubber with low permeability is used as a raw material for the inner liner 7. However, as previously mentioned, the effects are prominent when halogenated butyl rubber is used.

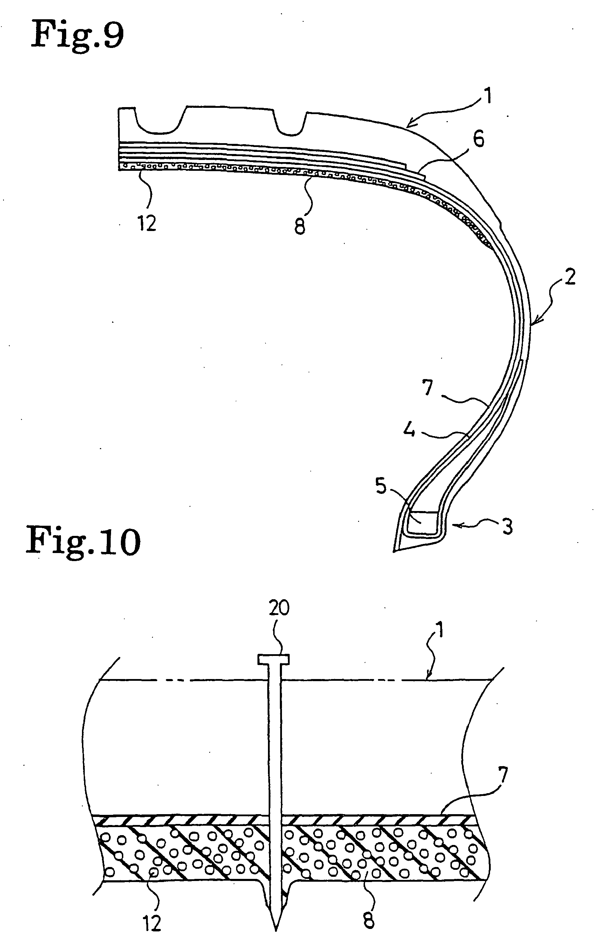

Fig. 9 shows a pneumatic tire formed in an embodiment of the present invention. In Fig. 9, reference numerals 1, 2 and 3 denote a tread, a sidewall and a bead, respectively. A carcass layer 4 is laid between a bilateral pair of beads 3 and 3, and both ends of the carcass layer 4 in a tire width direction thereof are turned up around the bead cores 5 from the inner to outer side of the tire. Belt layers 6 are provided on the periphery of the carcass layer 4 in the tread 1. An inner liner 7 is disposed on the inner side of the carcass layer 4. A sealant layer 8 is disposed on the inner side of the inner liner 7 at a position corresponding to the tread 1. This sealant layer 8 is made by distributing powder balloons 12 in the adhesive sealant, which becomes a matrix.

By thus distributing the powder balloons 12 in the adhesive sealant of the sealant layer 8 disposed on the inner surface of the tire, it is possible to maintain the thickness required to exhibit the self-sealing function even when the amount of the adhesive sealant is reduced. In addition, it is possible to suppress the weight increase due to the sealant layer to a minimum.

The punctureless effects by the pneumatic tire can be obtained as follows: as shown in Fig. 10, when a nail 20 pierces from the tread 1 to the sealant layer 8 on the inner side of the tire through the inner liner 7, the sealant of the sealant layer 8 sticks to the nail 20 so as to adhere to the nail 20 to seal the tire. Thus, air will not leak. By contrast, when the nail 20 is removed by centrifugal force upon high-speed driving, the sealant stuck to the periphery of the nail 20 is drawn to a through-hole of the tread 1 to seal the tire. Thus, air will not leak. At this time, the amount of the adhesive sealant stuck to the nail 20 increases in line with an increase in the thickness of the sealant layer 8.

In the present embodiment, the adhesive sealant is not particularly limited. However, it is preferable to use the adhesive sealant obtained by heating a sealant rubber composition containing 0.2 to 20 parts by weight of peroxide per 100 parts by weight of a rubber ingredient containing at least 50 wt. % of polyisobutylene.

When the foregoing decomposed compound of polyisobutylene is used as the adhesive sealant, it is possible to produce a pneumatic tire in the following process: in the normal process for producing a pneumatic tire, a sealant rubber composition sheet, in which the balloons 12 are distributed, is disposed on the inner surface of an unvulcanized tire, and the adhesive sealant layer 8 is formed by heating the sealant rubber composition at the same time as vulcanization of the unvulcanized tire.

Moreover, by heating and decomposing polyisobutylene in advance by peroxide, the adhesive sealant, in which the balloons 12 are mixed and distributed, is formed. The obtained adhesive sealant may be adhered to the inner surface of a finished tire.

In order to suppress the weight increase as much as possible while the self-sealing function is maintained, the porosity of the sealant layer 8, in which the balloons 12 are mixed and distributed, preferably ranges from 10 to 95%. If the porosity is less than 10%, the tire cannot be lightened. If the porosity exceeds 95%, the amount of the adhesive sealant in the sealant layer 8 is extremely small. Thus, the sealing performance will be degraded.

In the present embodiment, the thickness of the sealant layer 8 preferably ranges from 2.5 to 10 mm. If the sealant layer 8 is thinner than 2.5 mm, the puncture-preventing effects are reduced. If the sealant layer 8 is thicker than 10 mm, the weight will increase although the sealant is light. Therefore, these are not preferable.

The powder balloons 12 distributed in the adhesive sealant of the sealant layer 8 are hollow spherical fillers. At least one from the group consisting of glass (silica) balloons, fly ash balloons, shirasu balloons, carbon series balloons, organic polymer series balloons or the like is selected as appropriate. The glass balloons are made by inflating infinitesimal glass balls to which a foaming agent is added. The fly ash balloons are generated in coal-heating power plant, a furnace or the like. The shirasu balloons are made by inflating volcanic ash. The ingredients of the polymer series balloons are phenol, styrene or the like.

The powder balloons 12 may be formed to be hollow in advance and mixed with to be distributed in the adhesive sealant. Alternatively, balloons, which will be formed to be hollow by heating so that the inside is gasificated, may be disposed in an unvulcanized tire to form balloons by heating upon vulcanization.

The specific gravity of the balloons 12 preferably ranges from 0.2 to 0.7. If the gravity is less than 0.2, the strength of the balloons is reduced. If the gravity is more than 0.7, the weight increases. Thus, it is difficult to contribute to the lightening of the tire.

The sizes of the balloons 12 preferably range from 0.1 to 2 mm in diameter. If the diameter is smaller than 0.1 mm, the ratio of the addition amount does not contribute to increase in the porosity of the adhesive sealant. Accordingly, the balloons will not contribute to suppressing an increase in the tire weight. If the diameter is larger than 2 mm, a portion with a small amount of the adhesive sealant layer is formed locally. Thus, the sealing performance is degraded.

### [Experiment A]

Examples and comparative examples are detailed with regard to a reference example.

### Example 1

A pneumatic tire was prepared. The size of the tire was 205/65R15. The tire had a sealant layer and a cover rubber layer in a tread as shown in Fig. 1. The thicknesses of the sealant layer and the cover rubber layer were set to 3 mm and 1 mm, respectively. A rubber composition, which contained 30 parts by weight of carbon black (FEF), 35 parts by weight of a liquid ethylene-propylene copolymer (molecular weight of 2000) and 16 parts by weight of dicumyl peroxide per 100 parts by weight of polyisobutylene, was used as a sealant rubber composition. Vulcanization temperature and vulcanization time were set to 160°C and 20 minutes, respectively.

### Example 2

The same pneumatic tire as in Example 1 was prepared, except that the compounding amount of the liquid ethylene-propylene copolymer was 5 parts by weight in the sealant rubber composition.

### Example 3

The same pneumatic tire as in Example 1 was prepared, except that 35 parts by weight of liquid polybutadiene with a molecular weight of 2000 was compounded as the adhesive of the sealant rubber composition, instead of the liquid ethylene-propylene copolymer.

### Example 4

The same pneumatic tire as in Example 1 was prepared, except that 35 parts by weight of liquid polyisoprene with a molecular weight of 29000 was compounded as the adhesive of the sealant rubber composition, instead of the liquid ethylene-propylene copolymer.

### Comparative Example 1

The same pneumatic tire as in Example 1 was prepared, except that the compounding amount of the liquid ethylene-propylene copolymer was 60 parts by weight in the sealant rubber composition.

### Comparative Example 2

The same pneumatic tire as in Example 1 was prepared, except that 35 parts by weight of liquid polybutene with a molecular weight of 2350 was compounded as the adhesive of the sealant rubber composition, instead of the liquid ethylene-propylene copolymer.

### Comparative example 3

The same pneumatic tire as in Example 1 was prepared, except that 35 parts by weight of liquid polybutene with a molecular weight of 1000 was compounded as the adhesive of the sealant rubber composition, instead of the liquid ethylene-propylene copolymer.

For these seven types of pneumatic tires, the amount of gas generated upon vulcanization was observed, and the viscosity of the sealant layer was evaluated. An iron rod (14 mmΦ = 154 mm²) made of SS400 (the same steel used for the nail) was gently touched on the adhesive surface at the surface pressure of 1 g/mm², and separation power was measured after one minute. In the present invention, when the separation power was at least 40 kPa, the tire was determined to satisfy the application level. The results are listed in Table 1.

**Table 1**

| | Adhesive | Compounding Ratio | Amount of Gas | Viscosity |
|---|---|---|---|---|
| Example 1 | Liquid Ethylene-Propylene Copolymer (Molecular Weight: 2000) | 35 Parts by Weight | Small | 72 kPa |
| Example 2 | Liquid Ethylene-Propylene Copolymer (Molecular Weight: 2000) | 5 Parts by Weight | Small | 45 kPa |
| Example 3 | Liquid Polybutadiene (Molecular Weight: 2000) | 35 Parts by Weight | Small | 68 kPa |
| Example 4 | Liquid Polyisoprene (Molecular Weight: 29000) | 35 Parts by Weight | Small | 65 kPa |
| Comparative Example 1 | Liquid Ethylene-Propylene Copolymer (Molecular Weight: 2000) | 60 Parts by Weight | Small | 35 kPa |
| Comparative Example 2 | Liquid Polybutene (Molecular Weight: 2350) | 35 Parts by Weight | Large | 34 kPa |
| Comparative example 3 | Liquid Polybutene (Molecular Weight: 1000) | 35 Parts by Weight | Extremely Large | 29 kPa |

As shown in Table 1, the amount of gas generation was small, and the viscosity of the sealant layers was good in the pneumatic tires of Examples 1 to 4.

### [Experiment B]

An example and comparative examples are detailed with regard to a second reference example.

### Example 5, Comparative Examples 4, 5

Three types of pneumatic tires were prepared. The sizes of the tires were 205/65R15. Each tire had a sealant layer and a cover rubber layer in a tread as shown in Fig. 3. The thicknesses of the sealant layer and the cover rubber layer were set to 3 mm and 1 mm, respectively. A rubber composition, which contains 30 parts by weight of carbon black (FEF), 10 parts by weight of polybutene and 15 parts by weight of dicumyl peroxide per 100 parts by weight of polyisobutylene, was used as a sealant rubber composition. Meanwhile, the compounding of the rubber composition constituting the cover rubber layer varies as shown in Table 2.

The presence of separation of the cover rubber layer, the innermost layer, after produced was evaluated for each of these three types of pneumatic tires. The results are listed in Table 2.

**Table 2**

| (Unit: Parts By Weight) | Example 5 | Comparative example 4 | Comparative example 5 |
|---|---|---|---|
| Butadiene Rubber | 60 | - | - |
| Natural Rubber | 40 | 100 | - |
| Styrene-Butadiene Rubber | - | - | 100 |
| Carbon Black (FEF) | 40 | 40 | 40 |
| Softener | 10 | 10 | 10 |
| ZnO | 4 | 4 | 4 |
| Stearic Acid | 1 | 1 | 1 |
| Sulfur | 2.5 | 2.5 | 2.0 |
| Vulcanization Accelerator (CZ) | 1 | 1 | 1.5 |
| Presence of Separation of Cover Rubber Layer | Absent | Present | Present |

As shown in Table 2, since the pneumatic tire of Example 5 is provided with the cover rubber layer made of a rubber composition, a main ingredient of which is butadiene rubber, the gas generated upon vulcanization permeates the cover rubber layer. As a result, the cover rubber layer was not separated.

### [Experiment C]

Examples and a comparative example are detailed with regard to a third reference example.

### Example 6

A pneumatic tire was prepared, having the tire size of 205/65R15 as well as a sealant layer and a thermoplastic resin film in a tread as shown in Fig. 5. The thermoplastic resin film was disposed on the inner side of the sealant layer. A rubber composition, which contains 30 parts by weight of carbon black (FEF) and 15 parts by weight of dicumyl peroxide per 100 parts by weight of polyisobutylene, was used as a sealant rubber composition. Meanwhile, the thermoplastic resin film had a thickness of 0.1 mm and was constituted by nylon 11.

### Example 7

The same pneumatic tire as in Example 6 was prepared, except that the thermoplastic resin films were disposed on both sides of the sealant layer.

### Comparative Example 6

The same pneumatic tire as in Example 6 was prepared, except that a cover rubber layer of natural rubber series with a thickness of 1 mm was provided on the inner side of the sealant layer, instead of the thermoplastic resin film.

The uniformity of the thickness of the sealant layer was evaluated for each of these three types of pneumatic tires by cutting the tread to observe the inner surface of the tire. The results are listed in Table 3.

**Table 3**

| | Example 6 | Example 7 | Comparative Example 6 |
|---|---|---|---|
| Thermoplastic Resin Film | | | |
| Number of Layer | 1 | 2 | None |
| Thickness (mm) | 0.1 | 0.1 | (1.0) |
| Material | Nylon 11 | Nylon 11 | (Natural Rubber) |
| Uniformity of Thickness of Sealant Layer | Uniform | Uniform | Uneven |

As shown in Table 3, each of the pneumatic tires of Examples 5 and 6 had the sealant layer with uniform thickness in both the tire width and peripheral directions. Thus, those tires had excellent uniformity of the thickness. Meanwhile, the pneumatic tire of Comparative Example 6 had maldistribution of the sealant on a shoulder side in the tire width direction. Moreover, the thickness of the sealant layer was uneven in the tire circumferential direction.

### [Experiment D]

Examples and a comparative example are detailed with regard to a fourth reference example. Herein, evaluation was performed based on a substitute model for s pneumatic tire. Fig. 8 is a structural view of the model.

As shown in Fig. 8, carcass cords with 1100 decitex were disposed with a density of 60 cords/inch in the carcass layer 4. The carcass layer 4 was coated with carcass coating rubber to form the thickness of 1.2 mm entirely. Two of the carcass layers 4 were superposed so as to make the strings parallel. The inner liner 7 with a thickness of 0.7 mm was superposed on the carcass layer 4. In the case of providing a barrier layer, the barrier layer 11 with a thickness of 0.7 mm was superposed on the inner liner 7. Moreover, the sealant layer 8 was disposed on the center of the foregoing laminated body. The cover rubber layer 9 was superposed on the sealant layer 8 to cover. The obtained laminated body was vulcanized at 160°C for 15 minutes.

A rubber composition, which contains 30 parts by weight of carbon black (FEF), 35 parts by weight of polybutene and 16 parts by weight of dicumyl peroxide per 100 parts by weight of polyisobutylene, was used as a sealant rubber composition. Meanwhile, rubber compositions shown in Table 4 were used as rubber compositions for the carcass layer, the inner liner and the cover rubber layer.

**Table 4**

| (Parts By Weight) | Carcass Layer | Inner Liner Layer | Cover Rubber Layer |
|---|---|---|---|
| Natural Rubber | 70 | 30 | 50 |
| SBR | 30 | - | - |
| Butyl Rubber | - | 70 | - |
| BR | - | - | 50 |
| Carbon Black (GPF) | 60 | 60 | 70 |
| ZnO | 5 | 5 | 5 |
| Stearic Acid | 1 | 1 | 1 |
| Antioxidant (RD) | 1 | 1 | 1 |
| Aromatic Oil | 10 | 7 | 15 |
| Sulfur | 2.5 | 1 | 2.5 |
| Vulcanization Accelerator | 1.2 | 1.5 | 1.2 |

In Table 4, antioxidant (RD) is poly(2,2,4-trimethyl-1,2-dihydroquinoline). The vulcanization accelerator for the carcass rubber and cover rubber is N-cyclohexyl-2-benzothiazyl sulfenamide, and the vulcanization accelerator for the inner liner rubber is dibenzothiazyl sulfide.

Rubber compositions shown in Table 5 were used as rubber compositions of the barrier layers. Examples 8 to 11 are provided with a single barrier layer. The inner liner was used as a barrier layer in Examples 12 to 15. Comparative Example 7 does not have a barrier layer.

Next, moduli of elasticity (E1) of the carcass rubber and the inner liner rubber were measured by the following measurement method: the carcass layer and the inner liner layer were cut out from the obtained vulcanized component and sliced, thereby creating flat sheets. Based on JIS K6394 and ISO DIS2856, the modulus of elasticity was measured by a viscoelasticity spectrometer manufactured by Toyo Seiki Co., Ltd. Measurement conditions were a temperature of 20°C, a frequency of 20 Hz, an initial elongation of 10% and a dynamic strain of ± 2%. In addition, a 5 mm-wide, 20 mm-long sample was used, and the thickness was measured by vernier caliper. The results are listed in Table 5.

The moduli of elasticity (E1) shown in Fig. 5 are indicated by indices, where the moduli of elasticity of when the sealant is not disposed in the aforementioned laminated vulcanized material, in other words, the moduli of elasticity of the carcass rubber and the inner liner rubber in the sample modeling a general tire without a sealant layer are 100. In consideration of tire performance, the modulus of elasticity E1 with an index value of 100±10 is in a practical range.

**Table 5**

| | EXAMPLE 8 (BARRIER LAYER) | EXAMPLE 9 (BARRIER LAYER) | EXAMPLE 10 (BARRIER LAYER) | EXAMPLE 11 (BARRIER LAYER) | EXAMPLE 12 (INNER LINER) | EXAMPLE 13 (INNER LINER) | EXAMPLE 14 (INNER LINER) | EXAMPLE 15 (INNER LINER) | COMPARATIVE EXAMPLE 7 |
|---|---|---|---|---|---|---|---|---|---|
| BROMINATED BUTYL RUBBER | 100 | 100 | 100 | 100 | 100 | 100 | 100 | 100 | - |
| CARBON BLACK (GPF) | 60 | 60 | 60 | 60 | 60 | 60 | 60 | 60 | - |
| ZnO | 5 | 5 | 5 | 5 | 5 | 5 | 5 | 5 | - |
| STEARIC ACID | 1 | 1 | 1 | 1 | 1 | 1 | 1 | 1 | - |
| CLAY | - | 20 | - | - | - | 20 | - | - | - |
| ANTIOXIDANT (MBP) | - | - | 3 | - | - | - | 3 | - | - |
| PHENOTHIAZINE | - | - | - | 5 | - | - | - | 5 | - |
| AROMATIC OIL | 5 | 5 | 5 | 5 | 5 | 5 | 5 | 5 | - |
| SULFER | 1 | 1 | 1 | 1 | 1 | 1 | 1 | 1 | - |
| VULCANIZATION ACCELERATOR | 1.2 | 1.2 | 1.2 | 1.2 | 1.2 | 1.2 | 1.2 | 1.2 | - |
| MODULUS OF ELSTICITY E1 OF CARCASS RUBBER | 104 | 101 | 100 | 101 | 105 | 103 | 103 | 104 | 128 |
| MODULUS OF ELSTICITY E1 OF INNER LINER RUBBER | 97 | 98 | 99 | 101 | 94 | 96 | 96 | 95 | IMMEASURABLE |

In Table 5, the antioxidant (MBP) is 2,2'-methylene-(4-methyl-6-butylphenol). Vulcanization accelerator is dibenzothiazyl sulfide.

### Example 8

In Example 8, the barrier layer is constituted by brominated butyl rubber. From Table 5, the modulus of elasticity of the carcass rubber and the modulus of elasticity of the inner liner rubber were substantially at the same level as in the normal tire.

### Examples 9 to 11

These Examples 9 to 11 contain 20 parts by weight of clay, 3 parts by weight of 2,2'-methylene-(4-methyl-6-butylphenol) (nonflex MBP manufactured by Seiko Chemical Co., Ltd) which is a phenol series antioxidant and 5 parts by weight of phenothiazine in the barrier layer made of brominated butyl rubber in Example 8, respectively. As clearly shown in Table 5, the moduli of elasticity of the carcass rubber and the inner liner rubber did not change compared with a normal tire.

### Comparative Example 7

A barrier layer was not provided in Comparative Example 7. In this case, the modulus of elasticity of the carcass rubber increased greatly, and the inner liner rubber was softened. Thus, the inner liner rubber could not be sampled. In both cases, there is a possibility that the tire performance is impaired.

### Example 12

In Example 12, a barrier layer was not provided, and the inner liner made of brominated butyl rubber was provided. As apparent from Table 5, aggravation of the performance was significantly reduced compared with Comparative Example 7.

### Examples 13 to 15

Examples 13 to 15 contain 20 parts by weight of clay, 3 parts by weight of 2,2'-methylene(4-methyl-6-butylphenol) (nonflex MBP manufactured by Seiko Chemical Co., Ltd) which is a phenol series antioxidant and 5 parts by weight of phenothiazine in the inner liner rubber made of brominated butyl rubber in Example 12, respectively. As clearly shown in Table 5, the moduli of elasticity of both carcass rubber and inner liner rubber were substantially the same as in the normal tire.

### [Experiment E]

Examples and a comparative example are detailed with regard to an embodiment of the present invention.

### Examples 16 to 18, Comparative Example 8

Four types of pneumatic tires were prepared, each having a tire size of 205/65R15 and a sealant layer with a thickness of 3 mm was disposed in the tread as shown in Fig. 9. A rubber composition, which contains 30 parts by weight of carbon black (FEF), 10 parts by weight of polybutene and 15 parts by weight of dicumyl peroxide per 100 parts by weight of polyisobutylene, was used as a sealant rubber composition. Herein, the amount of powder balloons distributed in the sealant was varied, and the porosity of the sealant layer was set as in Table 6. Glass balloons were used as powder balloons.

For these four types of pneumatic tires, the weight increase due to the disposing of the sealant layer was measured. When the increasing amount was not more than 1 kg, the tire was satisfactory. Moreover, the sealing performance of each tire was evaluated. When the value of the sealing performance was not less than 8, the tire was satisfactory. In the evaluation of the sealing performance, 10 nails of nominal designation N75 (JIS A5508) were pegged on the tread surface. After the nails were removed, the tires were left for one minute. Then, the leakage states of air from the nail holes were observed. The number of nail holes without leakage was counted and set as a value of the sealing performance. The results are listed in Table 6.

**Table 6**

| | Porosity (%) | Increase In Weight (kg) | Sealing Performance | Evaluation Result |
|---|---|---|---|---|
| Comparative example 8 | 0 | 1.2 | 10 | Unsatisfactory |
| Example 16 | 10 | 1.0 | 9 | Satisfactory |
| Example 17 | 50 | 0.6 | 10 | Satisfactory |
| Example 18 | 95 | 0.1 | 8 | Satisfactory |

As shown in Table 6, all the pneumatic tires of Examples 16 to 18 were satisfactory. In other words, the tires having sealant layers containing balloons can exhibit good sealing performance while suppressing the weight increase.

### INDUSTRIAL APPLICABILITY

According to the present invention, it is possible to exhibit excellent puncture-preventing function while avoiding inconvenience aroused when the sealant layer is formed based on decomposition reaction of polyisobutylene. Therefore, the pneumatic tire of the present invention is extremely effective as a punctureless tire.

In addition, the present invention can be applied to both pneumatic radial tires and pneumatic bias tires.

## Claims

1. A pneumatic tire in which an adhesive sealant layer (8) is disposed in a region of an inner surface of the tire which corresponds at least to a tread (1) **characterized in that** the sealant layer (8) is made of an adhesive sealant and that powder balloons (12) are distributed in the adhesive sealant and wherein the adhesive sealant is obtained by heating a rubber composition which contains 0.2 to 20 parts by weight of peroxide per 100 parts by weight of a rubber ingredient containing not less than 50 wt% of polyisobutylene.

2. The pneumatic tire according to claim 1, wherein porosity of the sealant layer (8) ranges from 10 to 95%.

3. The pneumatic tire according to claim 1, wherein the balloons (12) are made of at least one selected from the group consisting of glass balloons, fly ash balloons, shirasu balloons and organic polymer series balloons.

4. The pneumatic tire according to any one of claims 1 to 3, wherein thickness of the sealant layer (8) ranges from 2.5 to 10 mm.

## Patentansprüche

1. Luftreifen, in dem eine klebende Abdichtungsschicht (8) in einem Bereich einer inneren Oberfläche des Reifens, die mindestens einer Lauffläche (1) entspricht, angeordnet ist, **dadurch gekennzeichnet, daß** die Abdichtungsschicht (8) aus einem klebenden Abdichtmittel hergestellt ist und daß Pulverballons (12) in dem klebenden Abdichtmittel verteilt sind, und in dem das klebende Abdichtmittel erhalten ist durch Erwärmen einer Kautschukzusammensetzung, die 0,2 bis 20 Gew.Teile Peroxid pro 100 Gew.Teilen eines Kautschukbestandteils, der nicht weniger als 50 Gew.% Polyisobutylen enthält, enthält.

2. Luftreifen gemäß Anspruch 1, in dem die Porosität der Abdichtungsschicht (8) von 10 bis 95 % reicht.

3. Luftreifen gemäß Anspruch 1, in dem die Ballons (12) aus mindestens einem hergestellt sind, ausgewählt aus der Gruppe bestehend aus Glasballons, Flugascheballons, Shirasu-Ballons und Ballons der organischen Polymerreihe.

4. Luftreifen gemäß mindestens einem der Ansprüche 1 bis 3, in dem die Dicke der Abdichtungsschicht (8) von 2,5 bis 10 mm reicht.

## Revendications

1. Bandage pneumatique dans lequel une couche de scellement adhésive (8) est disposée dans une région d'une surface interne du bandage qui correspond au moins à une bande de roulement (1), **caractérisé en ce que** la couche de scellement (8) est constituée d'un scellement adhésif, et **en ce que** des ballonnets de poudre (12) sont distribués dans le scellement adhésif, et où le scellement adhésif est obtenu en chauffant une composition de caoutchouc qui contient 0,2 à 20 parts en poids de peroxyde pour 100 parts en poids d'un ingrédient de caoutchouc contenant non moins que 50% en poids de polyisobutylène.

2. Bandage pneumatique selon la revendication 1, où la porosité de la couche de scellement (8) s'étend de 10 à 95%.

3. Bandage pneumatique selon la revendication 1, où les ballonnets (12) sont réalisés à partir d'au moins un sélectionné dans le groupe constitué de ballonnets en verre, des ballonnets de cendres volantes, de ballonnets shirasu et de ballonnets de la série de polymères organiques.

4. Bandage pneumatique selon l'une des revendications 1 à 3, où l'épaisseur de la couche de scellement (8) s'étend de 2,5 à 10 mm.
